# EUROPEAN PATENT APPLICATION

(11) **EP 3 470 450 A1**
(43) Date of publication of application: **17.04.2019**
(21) Application number: 18199743.8
(22) Date of filing: 10.10.2018
(51) Int. Cl.: C08G 61/12, C09D 133/02

(54) **POLYMERS FROM BIS-ARYLCYCLOBUTENE GROUP CONTAINING MONOMERS THAT CURE THROUGH OTHER GROUPS AND METHODS FOR MAKING THE SAME**

(30) Priority: 12.10.2017 US 201715782291
(71) Applicant: Rohm and Haas Electronic Materials, LLC, Marlborough, Massachusetts 01752 (US)
(72) Inventor: SATTLER, Wesley, Collegeville, PA Pennsylvania 19426 (US); GALLAGHER, Michael K., Marlborough, MA Massachusetts 01752 (US); WANG, Kevin Y., Marlborough, MA Massachusetts 01752 (US); TREFONAS III, Peter, Marlborough, MA Massachusetts 01752 (US); MULZER, Michael, Marlborough, MA Massachusetts 01752 (US); GILMORE, Christopher, Marborough, MA Massachusetts 01752 (US); PROKOPOWICZ, Gregory, Marlborough, MA Massachusetts 01752 (US)
(74) Representative: Houghton, Mark Phillip

(57) **Abstract**

The present invention provides organic solvent soluble or aqueous alkali soluble polymer composition comprising, in copolymerized form, one or more bis-arylcyclobutene monomers and one or more olefin or dienophile group containing second monomers, wherein the polymer is substantially free of (unreacted) arylcyclobutene groups. The compositions cure by a separate from the B-staging reaction which consumes substantially all of the arylcyclobutene groups in the composition; and they cure at temperatures below the cure temperature of less than 210°C, preferably, less than 180 °C. The polymer compositions find use in making films or coatings and are aqueous or organic solvent developable when used in photolithography. Methods for making the polymer compositions are also provided.

## Description

The present invention relates generally to the field of polymer materials, and, more particularly, to polymers of, in copolymerized form, bis-arylcyclobutene-containing monomers that have separate B-stage reaction and curing reaction mechanisms and which are useful in the manufacture of electronic devices. Bis-arylcyclobutene-containing polymers are used as dielectric materials in a variety of electronic applications, such as microelectronic packaging and interconnect applications. Such polymers, as those made from benzocyclobutene (BCB) monomers, are B-staged to a targeted molecular weight which must be below the gel-point of the material. For use in both liquid and dry-film dielectrics, the resulting B-staged material is usually highly viscous near the gel-point; and it has a propensity to gel during the B-stage because of the high level of cross-linking occurring in the polymer matrix. The known polymerization (i.e., B-stage) and cross-linking chemistries are identical. A successful B-stage results in a viscous polymer solution that has residual BCB functional groups in the material. The residual BCB groups are later used to further crosslink the material during a thermal cure process, which gives a peak exotherm at a very high temperature of about 260 °C. However, an unsuccessful B-stage results in a crosslinked, gelled polymer which is unusable and may ruin a reactor. Any residual BCB groups can gel during B-staging or at any time during heating. Accordingly, there remains a need for dielectric materials having a lower cure temperature than known BCB-containing materials and which are less likely to gel during B-staging. Known BCB containing dielectrics used in aqueous developers comprise BCB-acrylic acid (BCB-AA) which forms intermolecular anhydrides during B-staging and also causes gelation to occur.

European Patent no. EP0527572, to NEC Corporation, discloses benzocyclobutene resin precursors and methods for forming flexible, strong and chemically stable films therefrom. The precursor composition comprises a bis-benzocyclobutene monomer and an unsaturated compound having a higher dienophile activity than the bis-benzocyclobutene monomer, such as maleic anhydride. The bis-benzocyclobutene monomer is polymerized in the presence of from 0.001 to 0.2 moles of the unsaturated compound per mole of the bis-benzocyclobutene monomer. The compositions react by the same mechanisms in both B-staging and curing and do not solve the gelling problem with known bis-arylcyclobutene resin compositions.

The present inventors have sought to solve the problem of providing a dielectric material that cures at a lower temperature and avoids the attendant gelling of known BCB-containing dielectric materials during B-staging.

### STATEMENT OF THE INVENTION

In accordance with a first aspect of the present invention, an aqueous alkali soluble or an organic solvent soluble polymer composition comprises, in copolymerized form, one or more bis-arylcyclobutene monomers, such as a bis-benzocyclobutene (bis-BCB) or, preferably, 1,3-bis(2-bicyclo[4.2.0]octa-1,3,5-trien-3-yl-etheny1)-1,1,3,3-tetramethyldisiloxane (DVS-bisBCB) or a bis-arylcyclobutene monomer containing additional olefin or ethylenically unsaturated groups, and one or more olefin or dienophile group containing second monomers, such as ethylenically unsaturated monomers, for example, monomers containing at least one group chosen from a vinyl, allyl, olefin or alkyne group, preferably, a vinyl group, wherein the polymer is substantially free of (unreacted) arylcyclobutene groups.

Preferably, in accordance with the first aspect of the present invention, the polymer composition comprises a polymer of, in copolymerized form, the one or more bis-arylcyclobutene monomers and one or more olefin or dienophile group containing second monomers, such as (i) acidic or hydrolyzable group containing monomers, such as those chosen from monomers containing carboxylic acids, anhydrides, such as maleic anhydride, 3-methylenedihydrofuran-2,5-dione, or itaconic anhydride; amic acids, such as maleamic acid; N-imides of dicarboxylic acids, such as N-maleimide; N-alkyl imides of dicarboxylic acids, such as N-alkyl maleimides; N-aryl imides of dicarboxylic acids, such as N-aryl maleimides; carboxylic acid esters; acetoacetates; alkanols, such as hexafluoroisopropanol; amides; phenols; sulfonamides; cyclic sulfones; sulfonic acids; or (alk)oxysilane groups; or (ii) non-polar monomers, such as linear and branched alkenes; dienes, such as, 6-myrcene, cyclooctadiene, or tetraphenylcyclopentadienone; allyloxystyrene; aryl group containing acetylenes, such as diphenylacetylene phenylacetylene; silane group containing acetylenes, such as trimethylsilylacetylene; and allyl, alkyne or maleimide terminated polyols, polyarylene ethers, or polysiloxanes; and, the composition is substantially free of arylcyclobutene groups.

Preferably, the olefin or dienophile group containing second monomers have a normal boiling point of at least 150°C and wherein the composition can be developed by organic solvents. For lower boiling monomers (below 150°C), such as, hexene, cyclopentene, cyclohexene, butadiene, cyclopentadiene, and methyl acetylene, a pressurized reactor can be used to prevent loss through evaporation of the unsaturated compound prior to reaction with bis-arylcyclobutene.

Preferably, the one or more olefin or dienophile group containing second monomers of the present invention are chosen from (i) acidic group containing second monomers, such as maleic anhydride, 3-methylenedihydrofuran-2,5-dione, or itaconic anhydride, maleimide group containing monomers, such as N-alkyl maleimides, N-aryl maleimides or maleamic acids; and (ii) non-polar monomers having a normal boiling point of at least 150°C, such as 010-030 linear and branched alkenes; dienes, such as, 6-myrcene, cyclooctadiene, or tetraphenylcyclopentadienone; allyloxystyrene, aryl group containing acetylenes, such as diphenylacetylene phenylacetylene; silane group containing acetylenes, such as trimethylsilylacetylene; and allyl, alkyne or maleimide terminated polyols, polyarylene ethers, or polysiloxanes; and the composition is substantially free of arylcyclobutene groups, and cures at temperatures below the cure temperature of neat BCB monomer, such as from ambient temperature to 200°C or, preferably, below 185 °C.

Preferably, in accordance with the first aspect of the present invention, the polymer composition dissolves in aqueous alkali and comprises, in copolymerized form, the one or more bis-arylcyclobutene monomers, and one or more olefin group or dienophile group containing second monomers (i) having an acidic or hydrolyzable group chosen from carboxylic acids, anhydrides, amic acids, N-alkyl imides of dicarboxylic acids, N-aryl imides of dicarboxylic acids, carboxylic acid esters, cyclic sulfones, sulfonic acids, and oxysilanes, such as, more preferably, a cyclic anhydride or, even more preferably, an unsaturated dicarboxylic acid anhydride, for example, maleic anhydride, 3-methylenedihydrofuran-2,5-dioneor itaconic anhydride. The second monomers may possess two or more olefin groups or dienophile groups as well as one or more of the above acidic groups.

In accordance with the first aspect of the present invention, the polymer composition further comprises a crosslinker, a curing agent, such as an initiator or photoactive compound, a catalyst, or both.

In accordance with the first aspect of the present invention, the polymer composition further comprises a crosslinker chosen from a condensation crosslinker, such as a crosslinker reactive with an acidic group, a crosslinker reactive with an active hydrogen group or a crosslinker reactive with a hydrolysable siloxane group; a crosslinking monomer separate from the polymer, or mixtures thereof.

In accordance with the first aspect of the present invention, the polymer composition dissolves in aqueous alkali and comprises, in copolymerized form, the one or more bis-arylcyclobutene monomers and one or more olefin group or dienophile group containing second monomers (i) having an acidic group, such as, maleimides, preferably, a cyclic anhydride, such as maleic anhydride, 3-methylenedihydrofuran-2,5-dione or itaconic anhydride, and, preferably, further comprises a condensation crosslinker and cures via condensation reaction of a crosslinker with the acidic group, the crosslinker chosen from a diamine, a dithiol, a compound containing two or more amine groups, a polyamine or protected diamine, for example, N-tert-butoxycarbonyl group containing (di)amines or polyamines, a compound containing two or more thiol groups, the polymer being substantially free of arylcyclobutene groups.

In accordance with the first aspect of the present invention wherein the polymer composition dissolves in aqueous alkali and further comprises a photoacid generator, such as an onium salt, for example, triphenyl sulfonium triflate.
In accordance with the first aspect of the present invention, wherein the organic solvent soluble polymer composition comprises, in copolymerized form, one or more bis-arylcyclobutene monomers, and one or more (ii) non-polar olefin group or dienophile group containing second monomers, linear and branched alkenes; dienes, such as, 6-myrcene, cyclooctadiene, or tetraphenylcyclopentadienone; allyloxystyrene, aryl group containing acetylenes, such as diphenylacetylene phenylacetylene; silane group containing acetylenes, such as trimethylsilylacetylene; and allyl, alkyne or maleimide terminated polyols, polyarylene ethers, or polysiloxanes; and, wherein, the composition is substantially free of arylcyclobutene groups. Such (ii) non-polar second monomers, oligomers or polymers preferably have a normal boiling point of at least 150°C and the composition can be developed by organic solvents. For lower boiling monomers (below 150°C), such as, hexene, cyclopentene, cyclohexene, butadiene, cyclopentadiene, and methyl acetylene, a pressurized reactor can be used to prevent loss through evaporation of the unsaturated compound prior to reaction with bis-arylcyclobutene.

In accordance with the first aspect of the present invention, the polymer composition may comprise, in copolymerized form, one or more bis-arylcyclobutene monomers, and one or more olefin group or dienophile group containing second monomers containing a second dienophile group, such as ally! methacrylate, divinyl benzene, maleimide terminated polyimides, and can be crosslinked via thermally induced or light induced initiation in the presence of a curing agent, such as one chosen from a thermal initiator, a photoactive compound or a photoinitiator.

In accordance with the first aspect of the present invention, the polymer composition comprises from 20 to 80 wt.%, or, preferably, from 30 to 50 wt.% of polymer solids, based on the total weight of the polymer and aqueous alkali or organic solvent.

In accordance with a second aspect of the present invention, a thin film or coating on a substrate comprises the organic solvent soluble or aqueous alkali soluble polymer composition of the first aspect of the present invention that is substantially free of arylcyclobutene groups of, in copolymerized form, the one or more bis-arylcyclobutene monomers, such as a bis-benzocyclobutene (bis-BCB) or, preferably, 1,3-bis(2-bicyclo[4.2.0]octa-1,3,5-trien-3-yl-ethenyl)-1,1,3,3-tetramethyldisiloxane (DVS-bisBCB), and one or more olefin group or dienophile group containing second monomers, such as (i) the monomer that contains an acidic group or a hydrolysable group or (ii) a non-polar second monomer chosen from a cyclic olefin, a dimer thereof, a, a monomer that contains a second olefin group or dienophile group, and ethylenically unsaturated group containing non-polar monomers having a normal boiling point of at least 150°C, such as, for example, diphenylacetylene, or, more preferably, a second monomer which contains an unsaturated cyclic anhydride group, such as, maleic anhydride, 3-methylenedihydrofuran-2,5-dione or itaconic anhydride . As a part of the polymer of the present invention, the second monomer containing a second olefin group or dienophile group exists in copolymerized form; whereas the crosslinking monomer separate from the polymer comprises one or more monomers added to the polymer composition of the present invention.

In accordance with a third aspect of the present invention, an electronic device contains a dielectric layer comprising the thin film or coating of the second aspect of the present invention on a substrate of the present invention. In accordance with a fourth aspect of the present invention, a method of making an organic solvent or aqueous alkali soluble polymer composition comprises providing organic solvent or aqueous alkali and a monomer mixture of one or more bis-arylcyclobutene monomers, such as a bis-benzocyclobutene (bis-BCB), DVS-bisBCB or a bis-arylcyclobutene monomer containing additional olefin or ethylenically unsaturated groups, and one or more olefin group or dienophile group containing second monomers, B-staging the monomer mixture by heating the composition to from 160 to 200 °C or, preferably, less than 185 °C until substantially all of the arylcyclobutene groups have been reacted, preferably, in the presence of a radical initiation inhibitor, such as phenothiazine, butylated hydroxytoluene (BHT) or a quinone compound, to form the polymer composition. The methods preferably further comprise polymerizing the product of B-staging in the presence of a thermal or photo initiator compound to form the polymer composition. B-staging, with or without further polymerizing can then be followed by crosslinking or curing the resulting polymer in the presence of, respectively, a crosslinker, a curing agent or both. In the case of a curing agent, which may be a thermal or photo initiator compound or a photoactive compound, the curing of the resulting polymer equates with polymerization of the second monomer or reaction of the second monomer with any of the olefin or ethylenically unsaturated groups in any copolymerized bis-arylcyclobutene monomer. The proportions of aqueous alkali or solvent in accordance with the fourth aspect of the present invention are such as to form a polymer composition comprising from 20 to 80 wt.%, or,
preferably, from 30 to 50 wt.% of polymer solids, based on the total weight of the polymer and aqueous alkali or organic solvent.

In accordance with the methods of the fourth aspect of the present invention, comprising the providing of a monomer mixture containing an excess of the second monomer as moles of dienophile groups: moles of unreacted arylcyclobutene groups in the bis-arylcyclobutene monomer, B-staged oligomer or polymer, followed by heating the monomer mixture, preferably, in the presence of a radical inhibitor to from 160 to 200 °C or, preferably, less than 185 °C. Thus, when starting with a monomer mixture of one or more bis-arylcyclobutene monomers and one or more second monomers, the mole ratio of dienophile groups: unreacted arylcyclobutene groups is greater than 1:1 and up to 99:1, or preferably, from 60:40 to 90:10. However, when starting with a B-staged or oligomeric or polymer bis-arylcyclobutene composition, the mole ratio of dienophile groups: unreacted arylcyclobutene groups may range from 1:1 to 99:1 or, preferably, from 3:2 to 25:1, and the composition may contain only 1 to 50 wt.% of the second monomer, based on the total weight of the monomers used in making the polymer composition (including the B-staged polymer).

In accordance with the methods of the fourth aspect of the present invention, the methods comprise providing the B-staged or oligomeric or polymer bis-arylcyclobutene composition and B-staging a bis-arylcyclobutene group containing monomer of the present invention by heating the composition to from 160 to 200 °C or, preferably, less than 185 °C, preferably, wherein the bis-arylcyclobutene monomer contains additional olefin or ethylenically unsaturated groups, such as DVS-bisBCB, followed by adding the second monomer of the present invention in a molar excess of the dienophile group or olefin groups in the second monomer to the number of moles of unreacted arylcyclobutene, preferably, in the presence of the radical inhibitor, and heating the composition to from 160 to 200 °C or, preferably, less than 185 °C to endcap the arylcyclobutene groups.

In accordance with the methods of the fourth aspect of the present invention, the one or more second monomers or preferred seconds monomers are any that are useful in the first aspect of the present invention.

In accordance with a fifth aspect of the present invention, methods of making a thin films or coatings on a substrate comprise depositing and evaporating or coating on a substrate the organic solvent or aqueous alkali soluble polymer composition of the first aspect of the present invention. The compositions can, preferably, further comprise a curing agent chosen from a thermal initiator or a light initiator, a photoactive compound, or a crosslinker, such as a diamine or protected diamine.

In accordance with the methods of the fifth aspect of the present invention, the polymer can be heated in the presence of a curing agent, such as an initiator or a photoinitiator, a crosslinker, or both at a temperature of from room temperature or ambient temperature to less than 210°C or, preferably, less than 200 °C, or more preferably, from 120 to 200 °C, for example, from 150 to 180 °C.

The crosslinker or curing agent in accordance with the methods of the fifth aspect of (using the polymer composition of) the present invention can be any one or more of the crosslinkers or curing agents disclosed for use in the polymer composition of the first aspect of the present invention, disclosed above.

In accordance with the methods of the fifth aspect of the present invention, the methods can further comprise curing the film or coating at a temperature of from room temperature or ambient temperature to less than 210 °C or, preferably, from 120 to 200 °C, for example, from 150 to 180°C.

Unless otherwise indicated, conditions of temperature and pressure are ambient or room temperature (RT) and standard pressure. All ranges recited are inclusive and combinable.

Unless otherwise indicated, any term containing parentheses refers, alternatively, to the whole term as if no parentheses were present and the term without them, and combinations of each alternative. Thus, the term "(meth)acrylate" refers to an acrylate, a methacrylate, or mixtures thereof.

As used herein, all amounts are percent by weight and all ratios are molar ratios, unless otherwise noted.

All numerical ranges are inclusive of the endpoints and combinable in any order, except where it is clear that such numerical ranges are constrained to add up to 100%.

As used herein, the articles "a", "an" and "the" refer to the singular and the plural.

As used herein, the term "alkyl" includes linear, branched and cyclic alkyl. Likewise, "alkenyl" refers to linear, branched and cyclic alkenyl. "Aryl" refers to aromatic carbocycles and aromatic heterocycles. As used herein, the term "aliphatic" refers to an open-chain carbon-containing moiety, such as alkyl, alkenyl and alkynyl moieties, which may be linear or branched. Also as used herein, the term "alicyclic" refers to a cyclic aliphatic moiety, such as cycloalkyl and cycloalkenyl. Such alicyclic moieties are non-aromatic, but may include one or more carbon-carbon double bonds. "Halo" refers to fluoro, chloro, bromo, and iodo. The term "(meth)acrylate" refers to both methacrylate and acrylate, and likewise the term (meth)acrylamide refers to both methacrylamide and acrylamide. Unless the context clearly indicates otherwise, by "substituted" alkyl, alkenyl, or alkynyl is meant that one or more hydrogens on the alkyl, alkenyl, or alkynyl is replaced with one or more substituents chosen from halo, hydroxy, C₁₋₁₀ alkoxy, amino, mono- or di-C₁₋₁₀ hydrocarbyl substituted amino, C₅₋₂₀ aryl, and substituted C₅₋₂₀ aryl. Unless the context clearly indicates otherwise, by "substituted" aryl is meant that one or more hydrogens on the aryl is replaced by one or more substituents chosen from halo, hydroxy, C₁₋₁₀ alkyl, C₂₋₁₀ alkenyl, C₂₋₁₀ alkynyl, C₁₋₁₀ alkoxy, amino, mono- or di-C₁₋₁₀ hydrocarbyl substituted amino, C₅₋₂₀ aryl, and substituted C₅₋₂₀ aryl. "Alkyl" refers to an alkane radical, and includes alkane diradicals (alkylene) and higher-radicals. Likewise, the terms "alkenyl", "alkynyl" and "aryl" refer to the corresponding mono-, di- or higher-radicals of an alkene, alkyne and arene, respectively.

As used herein, the term "aromatic organic residue" embraces an organic residue that has only aromatic character, such as phenyl, as well as an organic residue that contains a combination of aromatic and aliphatic moieties.

As used herein, the term "curing" is meant any process, such as addition crosslinking or condensation, that increases the molecular weight of a polymer material or composition through the use of the methods making or using the compositions in accordance with the present invention. "Curable" refers to any polymer material capable of being cured under certain conditions. As used herein, the term "ASTM" refers to publications of ASTM International, West Conshohocken, PA.

As used herein, the term "DSC" or "Differential Scanning Calorimetry" refers to a method of measuring polymer cure profiles or exotherms using a Q2000™ DSC instrument (TA Instruments, New Castle, DE). DSC was carried out using a sample of isolated uncured polymer (<5 mg) placed in a sealed TzeroTm Aluminum hermetic sample pan (TA instruments). The sample pan was then put in the DSC cell along with a control pan and the DSC was then heated from RT to 300° C at a rate of 10° C per minute. For B-staging the arylcyclobutene containing polymers of the present invention, the amount of heat (J/g) liberated from a given sample between 200 and 300° C is defined to be the "residual degree of cure" or residual heat of reaction due to the arylcyclobutene ring opening reaction which has a peak exotherm of 258° C.

As used herein, the term "normal boiling point" refers to the boiling point of a given liquid in neat form at standard pressure.

As used herein, the term "organic solvent soluble" or "aqueous alkali soluble" means that all of a given composition dissolves in the give liquid or solvent, with or without stirring, within 2 (two) minutes of mixing the composition and the solvent or liquid in question. As used herein, the term "aqueous alkali" refers to a mixture of water and one or more of caustic, amine or ammonium group containing compounds having a pH of 10 or higher or, preferably, 10.5 or higher.

As used herein, the term "polymer" also includes oligomers. The term "oligomer" refers to relatively low molecular weight materials such as dimers, trimers, tetramers, pentamers, hexamers, and the like, including B-staged polymerized material, that are capable of further curing or polymerization.

As used herein, the term "solids" refers to any materials that remain a reaction product of the present invention; thus, solids include monomers and non-volatile additives that do not volatilize upon any of B-staging, polymerization and cure. Solids exclude water, ammonia and volatile solvents.

As used herein, the term "stoichiometry" of a reaction mixture refers to the ratio of molar equivalents of unreacted olefin groups or dienophile groups to unreacted arylcyclobutene groups in a given composition.

As used herein, unless otherwise indicated, the term "substantially free of arylcyclobutene groups" means that a given polymer composition has less than 1 wt.% or, preferably, less than 0.5 wt.% of unreacted arylcyclobutene groups, expressed as a percentage of the total weight of monomers used to make the polymer of the present invention. Endcapped or Diels-Alder ring opened arylcyclobutene groups comprise "reacted arylcyclobutene groups," while the remainder of such arylcyclobutene groups comprise "unreacted arylcyclobutene groups".

As used herein, unless otherwise indicated, the term "weight average molecular weight "or "Mw" means that value determined by gel permeation chromatography (GPC) at room temperature using a Waters Alliance High Pressure Liquid Chromatogram (HPLC) (Waters, Milford, MA) equipped with an isocratic pump, an autosampler (Injection volume (100-150 µl) and a Series of 4 ShodexTM (8 mm x 30 cm) columns, each filled with a polystyrene divinyl benzene (PS/DVB) gel against a standard calibrated from polystyrene as standards. As used herein, "number average molecular weight "or "Mn" is measured in the same way as weight average molecular weight and represents the median molecular size in a given polymer composition. As used herein, the term "PDI" refers to the ratio of Mw/Mn.

As used herein, the term "wt.%" stands for weight percent.

As used throughout this specification, the following abbreviations shall have the following meanings, unless the context clearly indicates otherwise: °C = degree Celsius; min. = minutes; hr. = hours; g = gram; L = liter; µm = micron = micrometer; nm = nanometer; mm = millimeter; mL = milliliter; MPa = megapascal; Mw = weight average molecular weight; Mn = number average molecular weight; and AMU = atomic mass unit. Unless otherwise noted, "wt.%" refers to percent by weight, based on the total weight of a referenced composition.

The inventors have found that a polymer made from bis-arylcyclobutenes, such as bis-BCB, which have few, if any, unreacted arylcyclobutene functional groups (<1 wt.% of monomers used to make the polymer) after B-staging but which does contain excess olefin groups or dienophile groups after B-staging. The B-staging process results in a material that contains little or no residual BCB groups because of the offset stoichiometry of the reaction wherein the one or more second monomers caps the BCB groups and consumes them. The B-staging process can be separate from polymerization, such as where a radical inhibitor is used; or B-staging and polymerization can comprise the same process, included together in any order so long as a molar excess of olefin group or dienophile groups in the second monomer over moles of unreacted arylcyclobutene groups. Accordingly, the polymer of the present invention does not have the ability to gel under the disclosed use conditions, and no longer has a thermal curing mechanism that exotherms at about 260° C. Instead the polymer crosslinks or cures at a temperatures below, or, preferably, well below, 200° C.

The olefin groups or dienophile groups remaining in the B-staged arylcyclobutene or BCB containing polymers of the present invention are still active for Diets-Alder chemistry. For example, the second monomers that contain olefins, such as cyclic olefins, or that contain unsaturated anhydrides will ring-open the cyclobutene ring at a lower temperature than BCB.

The polymers of the present invention rely on orthogonal mechanisms of B-staging and curing. B-Staging in accordance with the present invention removes or reacts the arylcyclobutene or, preferably, BCB groups with the second monomer by Diets-Alder ring opening, so that the resulting polymer will not gel by heating; and, separately, curing or crosslinking comprises such curing or crosslinking by other means, such as esterification or amidation or even a thermal cure at a temperature well below 200° C. As a result, the cure temperature and method can to be tuned by selecting the curing or crosslinking mechanism of the polymer composition of the present invention depending on the intended application.

In addition, the polymer compositions in accordance with the present invention by comprising, in copolymerized form, one or more second monomers enable separate polymerization after B-staging to enable tuning of the molecular weight of the resulting polymer according to the amount of arylcyclobutene or BCB group containing monomer used; the present invention thereby enables as well the tuning of the acid number of any polymer made using an acid or anhydride functional second monomer. Polymerization may include addition polymerization or reaction of the second monomer with itself and/or with any ethylenically unsaturated group(s) on the bis-arylcyclobutene monomer.

The polymer composition in accordance with the present invention enables the use of DVS-bis-BCB, as shown in formula (3), below, as one of the or the only arylcyclobutene group-containing monomer(s). The (i) acidic group or hydrolyzable group containing olefin group or dienophile group containing second monomers provide the functional groups, such as cyclic anhydrides, to allow for aqueous solubility. This lowers cost, and allows for a wider range of useful aqueous developable materials.

In accordance with the present invention, a preferred method to provide a polymer composition having aqueous alkali solubility is to synthesize a maleic anhydride-arylcyclobutene adduct, such as by heating a mixture of maleic anhydride or maleamic acid and an arylcyclobutene monomer prior to B-staging, for use as a monomer and then polymerizing the monomer in a B-staging reaction to form the polymer composition which can later be cured.

Suitable second monomers (i) that contain additional functional groups, such as acidic groups, for example, anhydride groups, or other hydrolyzable groups, such as active hydrogen or hydrolyzable sil(ox)ane groups, allow for modular post-polymerization functionalization or curing by condensation. One can, for example, react such monomers with a diamine or any multifunctional amine to form an amic acid precursor which can be imidized during a thermal cure process. Suitable diamines may include simple aromatic diamines such as phenylene diamine, Jeffamine™ ethoxylated amines (Huntsman Corp., Salt Lake City, UT), or oligoimides that are capped with amine groups. One can also hydrolyze the anhydride, such as by combining it with aqueous media and alcoholize such monomers, such as with t-butanol, to form monoesters.

Preferably, the polymer compositions in accordance with the present invention are at least oligomeric and have a weight average molecular weight of from 2,000 to 250,000 or, more preferably, from 4,000 to 200,000.
More preferably, as the polymer compositions in accordance with the present invention are B-staged to remove arylcyclobutene groups, the polymers also have a low polydispersity (pD) or ratio of weight average molecular weight to number average molecular weight (GPC) of from 2 to 12 or, preferably, from 2 to 7.

Bis-arylcyclobutene first monomers useful in preparing the polymers in accordance with the present invention include, but are not limited to, those having formula (1): 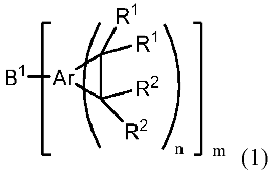 wherein B¹ is a divalent linking group, preferably containing one or more siloxane groups, ethylenically unsaturated groups, or both; Ar is a polyvalent aryl group and the carbon atoms of the cyclobutene ring are bonded to adjacent carbon atoms on the same aromatic ring of Ar; m is an integer of 1 or more; n is an integer of 2; each of R¹ and R² is independently, hydrogen or a monovalent hydrocarbon containing group or, preferably, hydrogen; the two R¹ moieties may be taken together along with the carbon to which they are attached to form a carbonyl or thiocarbonyl group; and the two R² moieties may be taken together along with the carbon to which they are attached to form a carbonyl or thiocarbonyl group. Preferably, the polyvalent aryl group, Ar, may be composed of 1 to 3, preferably, 1 aromatic carbocyclic or heteroaromatic rings. It is preferred that the aryl group comprises a single aromatic ring, and more preferably a phenyl ring. When Ar is a phenyl ring, the monomer is a bis-benzocyclobutene (BCB) monomer. The aryl group may optionally be substituted with 1 to 3 groups chosen from 01-6 alkyl, tri-C₁₋₆-alkylsilyl, C₁₋₆ alkoxy, halo, and carboxyl, preferably with one or more of C₁₋₆ alkyl, tri- C₁₋₃-alkylsilyl, C₁₋₃ alkoxy, chloro, bromo, fluoro, and carboxyl, and, more preferably, with one or more of C₁₋₃ alkyl, tri- C₁₋₃-alkylsilyl, C₁₋₃ alkoxy, and carboxyl. It is preferred that the aryl group is unsubstituted.

In formula (1), above, suitable divalent B¹ groups preferably have the formula - [C(R³)₂-C(R⁴)₂]ₓZ or -[C(R³)=CR]ₓZ, wherein each R³ and R⁴ are independently chosen from hydrogen, C₁₋₆ alkyl, and aryl; Z is chosen from hydrogen, C₁₋₆ alkyl, C₆₋₁₀ aryl, siloxaryl, siloxyalkyl, and -CO₂R⁵; each R⁵ is independently chosen from H, C₁₋₆ alkyl, C₁₋₆ hydroxyalkyl, C₆₋₁₀ aryl, C₆₋₁₀ hydroxyaryl, C₇₋₂₀ aralkyl, C₇₋₂₀ hydroxyaralkyl, and C₇₋₂₀ alkaryl; and x = 1 or 2. Preferably, R³ and R⁴ are independently chosen from H, C₁₋₃ alkyl, and aryl, and more preferably H and C₁₋₃ alkyl. It is preferred that R⁵ is H, C₁₋₃ alkyl, C₁₋₆ hydroxyalkyl, C₆₋₁₀ aryl, C₆₋₁₀ hydroxyaryl, and C₇₋₂₀hydroxyaralkyl. Z is preferably siloxyl or -CO₂R⁵. Preferred siloxyl groups have the formula -[Si(R⁶)₂-O]ₚ-Si(R⁶)₂-, wherein each R⁶ is independently chosen from H, C₁₋₆ alkyl, aryl, aralkyl, and alkaryl; and p is an integer from 1 or more. It is preferred that R⁶ is chosen from C₁₋₃ alkyl, C₆₋₁₀ aryl, and C₇₋₂₀ aralkyl. Suitable aralkyl groups include benzyl, phenethyl and phenylpropyl. Preferably, B¹ comprises two carbon-carbon double bonds (ethylenic
unsaturation); more preferably, B¹ comprises two carbon-carbon double bonds and a siloxyl group.

Preferably, the arylcyclobutene polymers of the present invention comprise as polymerized units one or more bis-benzocyclobutene monomers of formula (2): 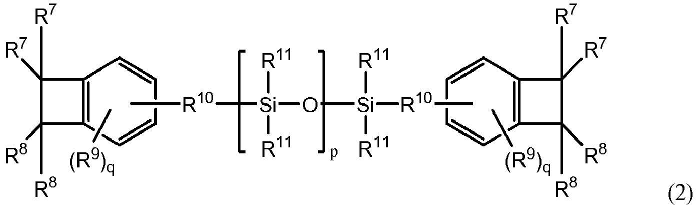
wherein each R⁷ and R⁸ is independently chosen from H, C₁₋₆ alkyl, C₁₋₆ alkenyl, C₁₋₆ alkoxy, halo, carboxy, C₂₋₆ carboxy-containing moiety, C₂₆ keto-containing moiety, C₁₋₆ amido-containing moiety, C₂₋₆ alkoxyalkanol, C₂₋₆ alkoxyester, -O-C₁₋₂₀ alkyl, -(C=O)-C₁₋₂₀ alkyl, -O-(C=O)-C₁₋₂₀ alkyl, -(C=O)-O-C₁₋₂₀ alkyl, -O-C₆₋₂₀ aryl, -(C=O)-C₆₋₂₀ aryl, -O-(C=O)-C₆₋₂₀ aryl, and -(C=O)-O-C₆₋₂₀ aryl, and preferably from
H, C₁₋₃ alkyl, C₁₋₃ alkoxy and halo; wherein the two R⁷ moieties may be taken together along with the carbon to which they are attached to form a carbonyl or thiocarbonyl; and wherein the two R⁸ moieties may be taken together along with the carbon to which they are attached to form a carbonyl or thiocarbonyl; each R⁹ is independently chosen from C₁₋₆ alkyl, tri- C₁₋₆-alkylsilyl, C₁₋₆ alkoxy, and halo; each
R¹⁰ is independently a divalent organic group which may be saturated, such as C₂₋₆ alkyl, -CH₂CH₂-, or ethylenically unsaturated group; each R¹¹ is independently chosen from H, C₁₋₆ alkyl, C₇₋₂₀ aralkyl and phenyl; p is an integer from 1 or more; and q is an integer from 0 to 3. Each R⁷ and R⁸ is preferably independently chosen from H, C₁₋₃ alkyl, and C₁₋₃ alkoxy, and more preferably each R⁷ and R⁸ is H. It is preferred that each R⁹ is independently chosen from C₁₋₆ alkyl, tri- C₁₋₃-alkylsilyl, C₁₋₃ alkoxy, and chloro, and more preferably from C₁₋₃ alkyl, tri- C₁₋₃-alkylsilyl, and C₁₋₃ alkoxy. Preferably, each R¹⁰ is independently chosen from, C₂₋₆ alkenyl, and C₂₋₆ alkynyl, and more preferably each R¹⁰ is independently chosen from, -CH=CH-, and -C≡C-. Each R¹¹ is preferably chosen from C₁₋₃ alkyl, and more preferably each R¹¹ is methyl. Preferably, p = 1-5, more preferably p = 1-3, and yet more preferably p = 1. It is preferred that q = 0.

A particularly preferred bis-arylcyclobutene monomer of formula (2) is 1,3-bis(2-bicyclo[4.2.0]octa-1,3,5-trien-3-yl-ethenyl)-1,1,3,3-tetramethyldisiloxane (DVS-bisBCB), which has the formula (3).

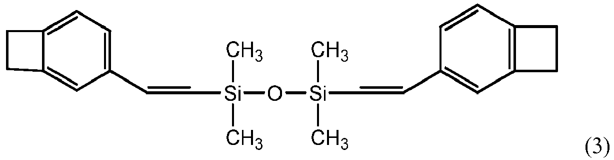

The bis-arylcyclobutene polymers of the present invention may comprise as polymerized units one bis-arylcyclobutene monomer or more than one bis-arylcyclobutene monomers. Preferably, the bis-arylcyclobutene polymers of the present invention comprise as polymerized units the bis-benzocyclobutene monomers of formula (2) or, more preferably, the monomer of formula (3). The one or more second monomers useful in preparing the present arylcyclobutene polymers are any which have one or more olefin groups or
dienophile groups. Such second monomers may have one or more acid or hydrolysable groups chosen from carboxylic acid, protected carboxylic acid such as a t-butyl ester, and sulfonic acid. The dienophile groups are any which are capable of reacting with a diene under Diels-Alder reaction conditions. Suitable dienophile groups comprise ethylenic unsaturation (double bond) and/or acetylenic unsaturation (triple bond), and preferably the dienophile groups comprise one or more ethylenically unsaturated carbon-carbon bonds (C=C) and/or acetylenically unsaturated carbon-carbon bonds (C=C). It is preferred that at least one dienophile groups is ethylenically unsaturated, and more preferably two or more dienophile groups in the second monomer are ethylenically unsaturated. Preferably, the second monomers have from 1 to 2 dienophile groups.

The present arylcyclobutene polymer compositions in accordance with the present invention may comprise as polymerized units one second monomer, or two or more distinct second monomers as polymerized units to tailor the desired physical properties, such as tensile strength, elongation and aqueous base developability, of the polymer.

Suitable second monomers for useful in making the polymer compositions in accordance with the present invention are free of arylcyclobutene moieties, such as, for example, (ii) non-polar monomers, such as tetraphenylcyclopentadienone; aryl group containing acetylenes, such as diphenylacetylene phenylacetylene; silane group containing acetylenes, such as trimethylsilylacetylene; and allyl, alkyne or maleimide terminated polyols, polyarylene ethers, or polysiloxanes; and the composition is substantially free of arylcyclobutene groups. Preferably, such monomers, oligomers and polymers (ii) have a normal boiling point of at least 150°C and wherein the composition can be developed by organic solvents. For lower boiling monomers (below 150° C), such as hexene, cyclopentene, cyclohexene, butadiene, cyclopentadiene, and methyl acetylene, a pressurized reactor can be used to prevent loss through evaporation of the unsaturated compound prior to reaction with bis-arylcyclobutene.

The arylcyclobutene polymer compositions in accordance with the present invention may optionally further comprise as polymerized units one or more (ii) non-polar second monomers comprising a diene, such as butadiene or 6-myrcene, or two or more dienophile groups, such as diallyl ether, allyloxystyrene, divinyl
benzene or diethynylbenzene. Second monomers comprising two or more dienophile groups may be used to impart addition crosslinking capabilities to the B-staged bis-arylcyclobutene polymer. The selection of such second monomers is within the ability of those skilled in the art.

The ratio of the total moles of olefin group or dienophile groups in the one or more second monomers to the total moles of unreacted bis-arylcyclobutene groups used to form the present polymers may vary from 99:1 to 50:50, or preferably from 90:10 to 60:40. However, so long as the total moles of olefin groups or dienophile groups to unreacted arylcyclobutene groups, second monomers may be added to B-staged bis-arylcyclobutene oligomers or polymers; in such a case, the mole % of second monomer dienophile groups to polymerized (reacted plus unreacted or total) arylcyclobutene groups is as low as 1:99. What matters is that the moles of dienophile in the one or more second monomers equals or exceeds the moles of unreacted arylcyclobutene groups in the composition used to make the polymer; the result is a polymer substantially free of unreacted arylcyclobutene groups.

The bis-arylcyclobutene polymers in accordance with the present invention may be B-staged by any suitable means, such as those described in U.S. Pat. Nos. 4,812,588; 5,136,069; 5,138,081; and Int. Pat. App. No. WO 94/25903, as long as substantially all arylcyclobutene groups are consumed in B-staging. In general, the polymers of the present invention are prepared by heating one or more of the bis-arylcyclobutene first monomers and one or more of the second monomers, typically in a suitable solvent, to the polymerization initiation temperature of the particular monomer(s) used. While not wishing to be bound by theory, it is believed that these monomers polymerize by a Diels-Alder cycloaddition, so no catalyst initiator or curing agents are necessary for the polymerization to occur. Typically, polymerization of these monomers is initiated at a temperature of from 165 to 190° C, or, preferably, 185 °C or less. The temperature at which the present monomers undergo polymerization is affected by any substituent on the cyclobutene ring. In general, when the cyclobutene ring is unsubstituted, the polymerization is initiated at 170 °C. Electron-donating or electron-withdrawing substituents on the cyclobutene ring generally lower the polymerization initiation temperature.
Suitable polymerization solvents are any organic solvents which dissolve the one or more monomers and have boiling points above the polymerization temperature of the monomers, such as mesitylene. Exemplary organic solvents include polar aprotic solvents such as amides and sulfones.

Polymerization time is typically from 1 to 60 hours, for example, 20 to 40 hours. For certain applications, it may be desired to stop the polymerization at the oligomer stage. Such oligomers composed of one or more monomers of the invention may be composed predominantly of dimers, trimers, tetramers, and the like, and may then be subsequently further polymerized. As used herein, the term "monomer(s) of the present invention" is intended to include the individual compounds described herein, as well as dimers, trimers and tetramers thereof which are then to be further polymerized. The polymers of the present invention may be used as is or may be isolated by adding a non-solvent, such as water or methanol, to precipitate the polymer from the solution and thereafter removing the organic solvent.

The polymer compositions of the present invention s may comprise one or more bis-arylcyclobutene polymers and one or more organic solvents. Suitable organic solvents are those in which the polymers are soluble. Particularly useful organic solvents are any solvents useful in the making or formulation of arylcyclobutene polymers. Exemplary organic solvents include, without limitation: aromatic hydrocarbons such as toluene, xylene, and mesitylene; alcohols such as 2-methyl-1-butanol, 4-methyl-2-pentanol, and methyl isobutyl carbinol; esters such as ethyl lactate, propylene glycol methyl ether acetate, methyl 2-hydroxyisobutyrate, methyl 3-methoxypropionate and 3-methoxy-1-butyl acetate; lactones such as gamma-butyrolactone; lactams such as N-methylpyrrolidinone; ethers such as propylene glycol methyl ether and dipropylene glycol dimethyl ether isomers, such as PROGLYDE™ DMM (The Dow Chemical Company, Midland, MI (Dow)); ketones such as cyclohexanone and methylcyclohexanone; and mixtures thereof.

Suitable additives that may be useful in the polymer compositions of the present invention include, without limitation, one or more of each of curing agents, crosslinkers, such as crosslinking monomers separate from the polymer, surfactants, inorganic fillers, organic fillers, plasticizers, adhesion promoters, metal passivating materials, and combinations of any of the foregoing. Suitable surfactants are well-known to those skilled in the art, and nonionic surfactants are preferred. Such surfactants may be present in an amount of from 0 to 10 g/L, and preferably from 0 to 5 g/L. Any suitable inorganic fillers may optionally be used in the present compositions, and are well-known to those skilled in the art. Exemplary inorganic fillers include, but are not limited to, silica, silicon carbide, silicon nitride, alumina, aluminum carbide, aluminum nitride, zirconia, and the like, and mixtures thereof. The inorganic filler may be in the form of a powder, rods, spheres, or any other suitable shape. Such inorganic filler may have any suitable dimensions. Inorganic filler may be used in an amount of from 0 to 80 wt%, based on the total weight of the composition. Preferably, the metal passivating material is a copper passivating agent. Suitable copper passivating agents are well known in the art and include imidazoles and benzotriaoles.

Any crosslinkers that react with any functional groups on any of the second monomers or any olefin group or dienophile group on the polymer of the present invention may be used as crosslinkers, provided that they crosslink with the arylcyclobutene polymer of the present invention under the conditions used to cure the composition. Suitable crosslinkers include, but are not limited to, diamines, polyamines, and polythiols, including polymers having multiple amine or thiol groups and added monomers having two or more olefin groups or dienophile groups, such as glycol di(meth)acrylates or diallyl phthalate and bis-arylcyclobutene monomers of formula (1) above wherein at least one of R¹ and R² is independently a monovalent hydrocarbon containing group, such as a C₁ to C₆ alkyl, carboxyalkyl, keto, aldehyde, acetal, ketal, or hydroxyalkyl group. The selection of such crosslinkers is within the ability of those skilled in the art. Such crosslinkers are typically used in an amount of from 0 to 20 wt.%, and preferably 0 to 10 wt.%, based on the total weight of the polymerizable monomers in the composition. The polymer compositions of the present invention find many uses, such as in photolithography, packaging, adhesive, sealing and bulk dielectric applications, such as in spin on coatings or buffer layers.

A variety of curing agents may be used in the polymer compositions of the present invention which are useful in photolithography. Suitable curing agents may aid in the curing of the bis-benzocyclobutene containing materials, and may be activated by heat or light. Exemplary curing agents include, but are not limited to, thermally generated initiators and photoactive compounds (photogenerated initiators). The selection of such curing agents is within the ability of those skilled in the art. Preferred thermal generated initiators are free radical initiators, such as, but not limited to, azobisisobutyronitrile, dibenzoyl peroxide, and dicumylperoxide. Preferred photoactive curing agents are free radical photoinitiators available from BASF under the Irgacure brand, and diazonaphthoquinone (DNQ) compounds including sulfonate esters of a DNQ compound. Suitable DNQ compounds are any compounds having a DNQ moiety, such as a DNQ sulfonate ester moiety, and that function as photoactive compounds in the present compositions, that is, they function as dissolution inhibitors upon exposure to appropriate radiation. Suitable DNQ compounds are disclosed in U.S. Pat. Nos. 7,198,878 and 8,143,360. The amount of photoactive compound varies from 0 to 30 wt.%, based on the total weight of the polymer solids. When present, the photoactive compound is typically used in an amount of 5 to 30 wt.%, preferably from 5 to 25 wt.%, and more preferably from 10 to 25 wt.%, based on the total weight of polymer solids.
Any suitable adhesion promoter may be used in the polymer compositions of the present invention and the selection of such adhesion promoter is well within the ability of those skilled in the art. Preferred adhesion promoters are silane-containing materials, and more preferably trialkoxysilane-containing materials. Exemplary adhesion promoters include, but are not limited to:
bis(trialkoxysilylalkyl)benzenes such as bis(trimethoxysilylethyl)benzene; aminoalkyl trialkoxy silanes such as aminopropyl trimethoxy silane, aminopropyl triethoxy silane, and phenyl aminopropyl triethoxy silane; and other silane coupling agents, as well as mixtures of the foregoing. Particularly suitable adhesion promoters include AP 3000, AP 8000, and AP 9000S, (Dow Electronic Materials, Marlborough, MA).

The polymer compositions of the present invention may contain from 0 to 15 wt.% of an adhesion promoter based on the total weight of the composition, preferably from 0.5 to 10 wt.%, more preferably from 1 to 10 wt.%, yet more preferably from 2 to 10 wt.%.

The photolithographic polymer compositions the present invention may be prepared by combining one or more polymers of the present invention and any organic solvents, water or additional components in any order. When the present compositions contain a curing agent such as a photoactive compound, such as a diazonaphthoquinone, an onium salt or photoinitiator, it is preferred that the curing agent is first dissolved in a suitable organic solvent or aqueous alkali, then combined with one or more present polymers and any optional surfactant, and then combined with any optional adhesion promoter. Selection of a suitable photoactive compound is within the ordinary level of skill in the art.

The bis-arylcyclobutene-containing polymer compositions of the present invention are useful in forming arylcyclobutene containing coatings that are more easily developable using aqueous alkali when compared to coatings prepared from conventional benzocyclobutene-containing polymers.

Any of the compositions of the present invention can be used to form a layer of a bis-arylcyclobutene suitable for use as dielectric layers, permanent bonding adhesives, as stress buffer layers, and the like.
The polymer compositions of the present invention may be coated on a substrate by any suitable method. Suitable methods for disposing the present compositions include, but are not limited to, spin-coating, curtain coating, spray coating, roller coating, dip coating, vapor deposition, and lamination such as vacuum lamination, among other methods. In the semiconductor manufacturing industry, spin-coating is a preferred method to take advantage of existing equipment and processes. In spin-coating, the solids content of the composition may be adjusted, along with the spin speed, to achieve a desired thickness of the composition on the surface it is applied to.

Typically, the polymer compositions of the present invention are spin-coated at a spin speed of 400 to 4000 rpm. The amount of the present compositions dispensed on the wafer or substrate depends on the total solids content in the composition, the desired thickness of the resulting layer, and other factors well-known to those skilled in the art. When a film or layer of the present compositions is cast, such as by spin-coating, much (or all) of the solvent evaporates during deposition of the film. Preferably, after being disposed on a surface, the composition is heated (baked) to remove any remaining solvent. Typical baking temperatures are from 90 to 180 °C, although other temperatures may be suitably used. Such baking to remove residual solvent is typically done for approximately 2 minutes, although longer or shorter times may suitably be used. The bis-arylcyclobutene polymers of the present invention are typically cured by heating for a period of time. Suitable curing temperatures range from ambient temperature to 210° C. Typically curing times range from 1 to 600 minutes.

Preferably, layers of the polymer compositions of the present invention may also be formed as a dry film and disposed on the surface of a substrate by lamination. A variety of suitable lamination techniques, including vacuum lamination techniques, may be used and are well known to those skilled in the art. In forming a dry film, the present compositions are first disposed, such as coated, onto a front surface of a suitable film support sheet such as a polyester sheet, preferably polyethyleneterephthalate (PET) sheet, or a polyimide sheet such as KAPTON™ polyimide (DuPont, Wilmington, DE), using slot-die coating, gravure printing, or another appropriate method. The composition is then soft baked at a suitable temperature, such as from 90 to 140 °C, for an appropriate time, such as from 1 to 30 minutes, to remove any solvent. A polymer film cover sheet such as polyethylene is then roll-laminated at room temperature onto the dried composition to protect the composition during storage and handling. To dispose the dried composition onto the substrate, the cover sheet is first removed. Then, the dried composition on the support sheet is laminated onto the substrate surface using roll-lamination or vacuum lamination. The lamination temperature can range from 20 to 120 °C. The support sheet is then removed (peeled), leaving the dried composition on that surface.

A wide variety of electronic device substrates may be employed in the present invention. An electronic device substrate is any substrate for use in the manufacture of any electronic device. Exemplary electronic device substrates include, without limitation, semiconductor wafers, glass, sapphire, silicate materials, silicon nitride materials, silicon carbide materials, display device substrates, epoxy mold compound wafers, circuit board substrates, and thermally stable polymers. As used herein, the term "semiconductor wafer" is intended to encompass a semiconductor substrate, a semiconductor device, and various packages for various levels of interconnection, including a single-chip wafer, multiple-chip wafer, packages for various levels, substrates for light emitting diodes (LEDs), or other assemblies requiring solder connections. Semiconductor wafers, such as silicon wafers, gallium-arsenide wafers, and silicon-germanium wafers, may be patterned or unpatterned. As used herein, the term "semiconductor substrate" includes any substrate having one or more semiconductor layers or structures which include active or operable portions of semiconductor devices. The term "semiconductor substrate" is defined to mean any construction comprising semiconductive material, such as a semiconductor device. A semiconductor device refers to a semiconductor substrate upon which at least one microelectronic device has been or is being fabricated. Thermally stable polymers include, without limitation, any polymer stable to the temperatures used to cure the arylcyclobutene material, such as polyimide, for example, KAPTON™ polyimide (DuPont, Wilmington, DE).

When compositions of the present invention which do not contain an adhesion promoter are used, the surface of the substrate to be coated with the present compositions may optionally first be contacted with a suitable adhesion promoter or vapor treated. Such treatments improve the adhesion of the bis-arylcyclobutene polymer compositions of the present invention to the substrate surface. Any suitable method, such as spin-coating, dip coating, spray coating, curtain coating, roll coating, vapor deposition, and the like, may be used to contact the substrate surface with the adhesion promoter. Spin-coating is a preferred method for contacting the substrate surface with an adhesion promoter. Any suitable adhesion promoter may be used and the selection of such adhesion promoter is well within the ability of those skilled in the art. Preferred adhesion promoters are silane-containing materials, and more preferably trialkoxysilane-containing materials.

Exemplary adhesion promoters useful to pre-treat the substrate surface are those described above. Various vapor treatments known in the art may be used to increase the adhesion of the arylcyclobutene polymers of the present invention to the substrate surface, such as plasma treatments. In certain applications, it may be preferred to use an adhesion promoter to treat the substrate surface prior to coating the surface with the present compositions.

EXAMPLES: The present invention will now be described in detail in the following, non-limiting Examples:
Unless otherwise stated all temperatures are room temperature (21-23°C) and all pressures are atmospheric pressure (-760 mm Hg or 101 kPa). Notwithstanding other raw materials disclosed below, the following raw materials were used in the Examples:
Bis-BMI or BMI: Bisphenol bismaleimide or bismaleimide (unless otherwise indicated, FW 358.35);
BCB-AA: benzocyclobutene-acrylic acid;
Developer 1: 0.26N TMAH (tetramethyl ammonium hydroxide);
DPA: Diphenyl acetylene;
DVS or DVS-bis-BCB: (divinyl siloxane containing bisbenzocyclobutene monomer);
MAH: maleic anhydride;
MBA: 3-methoxy butylacetate solvent;
MI: maleimide;
NPM: N-Phenylmaleimide;
N541 epoxy: Mixture of glycidyl ethers of aromatic phenols EEW = 171, and is a semi-solid-liquid;
GE38 epoxy: Mixture of glycidyl ethers of polyols, EEW = 167, and is a liquid;
PI 46k: maleimide terminated polyimide, 46 kDa MW, solid.
PAC: diazonaphthoquinone photoactive compound, solid.
TPMA: Adhesion promoter, N-[3-(triethoxysilyl)propyl]maleamic acid.

The materials were analyzed in various disclosed ways, including, as follows:
Chemical resistance was tested by immersing a cured wafer or indicated product fragment in DMSO at 60 °C for 15 minutes, and measuring film thicknesses before and after.

Thermal stability was tested by running TGA analysis (Q500TM TGA instrument, TA Instruments, New Castle, DE) on cured wafer or indicated product scrappings. The sample was heated to 150 °C and held for 15 minutes to eliminate moisture, then finally heated to 400 °C at a rate of 10 °C/min.

FT-ATR-IR spectroscopic analysis: ATR-FT-IR (Attenuated Total Reflection Fourier Transform Infrared) spectra were taken on a Thermo Scientific NicoletTM 6700 FT-IR with a Smart DURASAMPIIR module (Thermo Fisher Scientific, Waltham, MA) to allow for ATR spectra to be obtained. The background spectrum was taken as air for all samples. No correction was applied. Samples were taken by covering the diamond crystal completely and acquiring and averaging four scans.

Mole Ratio Calculation: Moles of second monomer olefin group or dienophile groups to moles of unreacted arylcyclobutene groups was calculated from the starting number of moles of bis-arylcyclobutene monomer. The residual exotherm from B-staging was measured in J/g and compared to the total enthalpy in the bis-arylcyclobutene monomer (in J/g, for DVS it is -800 J/g, corresponding to 156 J/mmol of BCB). The ratio of residual exotherm to enthalpy gave a number of mmols of bis-arylcyclobutene monomer per gram of solids; this was multiplied by the total mass in grams of solid, to give total mmols of bis-arylcyclobutene monomer. This was compared to number of mmoles of second monomer added to give the mole ratio.

Example 1: In this example, the monomer mixture contains 1.9 moles of olefin groups per mole of BCB groups. This excess of moles of unreacted second monomer or offset stoichiometry (*i*) lowers the crosslink density, *(ii)* retards the molecular weight growth of the polymer and *(iii)* allows for a much more controlled polymerization. DVS-bis-BCB (10.0 g, 25.60 mmol), maleic anhydride (4.0 g, 40.79 mmol), Bis-F-BMI (1.0 g, 2.79 mmol) and phenothiazine (radical inhibitor) (0.2 g, 1.00 mmol) was added to a 3-neck 100 mL round bottom flask. 3-methoxy butylacetate (MBA, 17.0 g) and y-butyrolactone (GBL, 5.0 g) were then added to the flask. The 3-neck round bottom flask was then equipped with a reflux condenser and a J-Kem thermocouple (J-KEM Scientific, Inc., Saint Louis, MO). Septa were used to seal the flask, and nitrogen was then sparged through the mixture for 20 minutes. The reaction was then heated used a heating mantle to a target temperature of 175 °C. After ca. 10 minutes, the solution reached ca. 100 °C and a red solution was obtained. The reaction was heated for a total time of 18 hours after which the solution was allowed to cool to RT. GPC and DSC analysis was performed. The GPC and DSC procedure was repeated for another 12 hours (30 hrs total), then another 6 hours (36 hrs total), then another 12 hours (48 hr total), then another 12 hours (60 hrs total), then another 64 hours (124 hrs total). The GPC and DSC analysis is shown in Tables 3 and 4, below. As a comparison, a conventional aqueous developable composition made from 100% of a BCB-AA adduct, the molecular weight growth profiles are shown in Table 4, below.

To tune the dissolution rate of the polymer, the anhydride functionality was used as a modular handle for functionalization. In this experiment, hydrolysis produced the corresponding diacid. This was confirmed via an FT-ATR-IR spectroscopic analysis. A at 1774 cm⁻¹ corresponding to the anhydride vibration decreased,
whereas the bands that increased at ca. 3400 and 1712 cm⁻¹ corresponded to the carboxylic acid vibrations Alternatively, the anhydride can be cleaved by an alcohol to form the ester-acid. FT-ATR-IR spectroscopic analysis demonstrated this in an example using tert-butanol: that is decreasing at 1774 cm⁻¹ corresponds to the anhydride vibration, whereas the bands that are increasing at ca. 3400 and 1712 cm⁻¹ corresponds to the carboxylic acid/ester vibrations.

Example 2 Polymer From B-Staged Bis-Arylcyclobutene Monomer: 18 grams of a B-staged polymer (40 wt.% solids in 3-methoxy butylacetate solvent, made from 30 mole percent BCB-AA adduct and 70 mole percent DVS-bis-BCB) was added to a 3-neck 100 mL round bottom flask. Maleic anhydride (30.0 g, 305.9 mmol), phenothiazine (1.0 g, 5.0 mmol) and 3-methoxy butylacetate (11.2 g) was then added to the flask. The estimated mole ratio of Man to mols unreacted BCB was approx. 21:1. The 3-neck round bottom flask was then equipped with a reflux condenser and the J-Kem thermocouple. Septa were used to seal the flask, and nitrogen was then sparged through the mixture for 20 minutes. The reaction was then heated used a heating mantle to a target temperature of 175 °C for 12 hours. The reaction was then allowed to cool to room temperature. The resulting material was precipitated into a mixture of H20/Me0H, washed with H2O, and then vacuum dried overnight. The polymer before and after maleic anhydride capping was put into a conventional AD-BCB formulation (including a polymer made from bis-arylcyclobutene monomer, N541 epoxy, PAC, and TPMA). These formulations were spin-coated onto 2 inch wafers at ca. 1000 rotations-per-minute for 30 seconds, and then soft-baked for 90 seconds at 120 °C. The material was scratched off into pans for DSC analysis. DSC cure analyses without endcapping (where monomers are mixed and reacted without radical inhibitor) and after maleic anhydride capping (inventive Example 2) clearly demonstrated a significant decrease in the exothermic cure from BCB after capping is completed.

A control Example 2A was made in the same way as in Example 2, above, except that adducts of the bis-arylcyclobutene monomer (BCB or DVS) and the second monomer were not made before B-staging/polymerization. Instead, all monomers were mixed and polymerized or reacted at once. The exotherm at ca. 160 °C in the inventive polymer of Example 2 was due to epoxy-acid cure, whereas the exotherm at ca. 260 °C in the polymer of Example 2A wherein B-staging, polymerization and cure occur together in the presence of unreacted BCB, is due to BCB cure.

### DSC analysis of the B-staged Polymer in Example 2

In Example 2A, without endcapping, the residual exotherm of the material in DSC was 306 J/g (on solids basis), and the material showed a large exotherm at 260°C. In Example 2,with endcapping, residual exotherm was < 40 J/g (on solids basis) and the material gave no significant peak above 200 °C.

Example 3: DVS-bis-BCB (30.0 g, 25.60 mmol), maleic anhydride (12.0 g, 40.79 mmol), Bis-F-BMI (3.0 g, 2.79 mmol) and phenothiazine (0.6 g, 1.00 mmol) was added to a 3-neck 300 mL round bottom flask. 3-methoxy butylacetate (MBA, 51.0 g) and y-butyrolactone (GBL, 15.0 g) were then added to the flask. The 3-neck round bottom flask was then equipped with a reflux condenser and the J-Kem thermocouple. Septa were used to seal the flask, and nitrogen was then sparged through the mixture for 20 minutes. The reaction was then heated used a heating mantle to a target temperature of 175 °C. The reaction was heated for a total time of 60 hours after which the solution was allowed to cool to RT. GPC and DSC analysis was then performed. The weight-average molecular weight was shown by GPC analysis to be 14,500 g/mol, and the DSC analysis shows a residual BCB cure of 50.9 J/g over a range of from 170 to 300 °C. Residual cure was greatly reduced, evidencing low energy polymerization or B-staging; this figure corresponded to 25% of residual cure of the control polymer (B-staged polymer of 40 wt.% solids in 3-methoxy butylacetate solvent, made from 30 mole percent BCB-AA adduct and 70 mole percent DVS-bis-BCB) and 17% of the residual cure of an AD-BCB polymer. At this point, 34 grams of the inventive material was taken out of the flask to reserve as control. The rest of the material was hydrolyzed as follows. H2O (3.0 g, 166.7 mmol) was added to the flask, and the solution was heated for 23 hours at 100 °C. FT-ATR-IR data confirmed hydrolysis as shrinkage of the anhydride peak and growth of the carboxylic acid peak. The hydrolyzed polymer was then put into a formulation of 64 wt.°/o,based on total solids weight percent, of the inventive polymer, 12 wt.% epoxy NPB-9 (2,1,5) in PAC, 19 wt.% DIC N541, and 5 wt.% TPMA. The formulation was tested for lithographic, thermal and chemical resistance properties.

The formulation was spin coated at 500RPM and soft baked at 120 °C for 2 minutes to make a wafer. Half of the wafer was then flood exposed (1000 mJ/cm² using a broadband Suss Mask Aligner (Suss MicroTec SE, Garching, DE) and then puddle developed using 0.26N tetramethylammonium hydroxide (TMAH) for 20 seconds. Film thicknesses before and after developments were measured giving exposed and unexposed dissolution rates of 0.405 lam/sec and 0.100 lam/sec, respectively. The results determined that a 30 second single puddle development was appropriate as the lithographic process. Another wafer was spin coated and soft baked under the same conditions. The wafer was then exposed with via patterns using an ASML200 Stepper (ASML Inc., Veldhoven, Netherlands, 1456 mJ/cm² center dose, 52mJ/cm² step). The wafers were then cured at 250 °C for 1 hour.

The inventive material performed at a high level in terms of its photolithography, with clean development, high resolution with high aspect ratio and tunable angled side walls, no residual scumming, and no undercut. Additionally, chemical resistance testing showed a good 4.0% increase in thickness when immersed in DMSO at 60 °C for 15 minutes; and thermal stability testing gave a good 5 wt.% weight loss result at 347 °C.

Mole Ratio Calculation: There were 35.68 mmols of BCB in the B-staged polymer before B-staging. After B-staging there was a 306 J/g residual exotherm. In DVS-bis-BCB, there is -800 J/g of enthalpy, corresponding to 156 J/mmol of BCB. Therefore, in the sample, there are approximately 2mmols of BCB per gram of solids; 7.2 grams of solid, so there are 14.4 mmols of BCB. 305.9
mmoles of Man are added. The ratio is 306:14.4, which is approx. 21:1.

The materials above were reacted and tested, as follows:
Rxn time: B-staging reaction time until known exotherm is below 30 J/g.

Acid #: mmoles of acid per gram of total monomer as determined by stoichiometric calculation.

Film thickness: After spin coating the indicated coating at 1200 rpm for 30 seconds, then soft-baking at 120 °C for 90 seconds, as determined by light interference measurement.

B.D.R.: Base dissolution rate indicated developability in aqueous alkali measured in 0.26N TMAH (Developer 1) in water at room temperature immerse coated wafer for 30 to 60 seconds and measure film thickness before and after; acceptable is 0.1 or more.

BDR results are shown in Tables 1 and 2, below.

**Table 1: Aqueous Developability**

| **Example** | **DVS (mmol)** | **MAH (mmol)** | **Rxn time (hr)** | **Acid # (mmol/g)** | **Film thickness (µm)** | **B.D.R (µm/s)** |
|---|---|---|---|---|---|---|
| **4*** | 15.00 | 0.375 | 31 | 0.13 | 1.6 | n.a. |
| **5*** | 15.00 | 0.375 | 16 | 0.13 | n.a. | See note a |
| 6¹ | 13.00 | 13.00 | 31 | 4.09 | 4.0 | 0.40 |
| 72 | 7.50 | 30.00 | 31 | 10.22 | 10.5 | 0.58 |

| | | | | | | |
|---|---|---|---|---|---|---|
| *- Denotes Comparative Example; a. When the film was put into CD-26, flaking and oily residue formed. Clean dissolution was not observed, and the silicon wafer was left with a scum residue. 1. Polymer in Example 6 was formed by heating the monomer mixture at 183 °C for a period of 18 hours; 2. Polymer in Example 7 was formed by heating the monomer mixture at 183 °C for a period of 18 hours. Polymerized using MBA as a solvent, the solvent made up 60 wt.% of the total mass. BHT was added at 1% by moles based on the amount of DVS-bis-BCB. | | | | | | |

In all of Examples 4, 5, 6 and 7, butylated hydroxyltoluene (BHT) added at 1 mol%, based on total moles of added monomer. Samples A and AA were formed by heating the monomer mixture at 183 °C. When heating the sample to what would be a reasonable point (e.g., the point at which we could use it for low cure applications), the sample gels as shown in second line above (code AA). Therefore, we decreased the time of B-staging to get a spin-coatable sample (this sample has a high temperature cure, code A). Dissolution in 0.26N tetramethylammonium hydroxide did not work well, it flaked and left a residue on the wafer product, i.e., scumming. The inventive Examples 6 and 7 comprise are polymers from endapped-BCB. Due to the significantly higher level of maleic anhydride (MAH), after heated for 31 hours, there is no gelling, but instead, a medium viscosity solution. The base dissolution rates are shown in the last column.

All polymers in shown Table 2, below were B-staged from the indicated monomer mixtures at 183 °C for 18 hours.

**Table 2: More Aqueous Developable Polymer Compositions**

| **Example** | **DVS (mmol)** | **MAH (mmol)** | **Rxn time (hr)** | **Acid # (mmol/g)** | **Film thickness (µm)** | **B.D.R (µm/s)** |
|---|---|---|---|---|---|---|
| **8*** | 15.00 | 0.375 | 18 | 0.13 | 5.7 | 0.0 |
| **9** | 13.00 | 13.00 | 18 | 4.09 | 12.5 | 0.05 |
| **10** | 7.50 | 30.00 | 18 | 10.22 | 5.4 | 0.22 |

| | | | | | | |
|---|---|---|---|---|---|---|
| *- Denotes Comparative Example. | | | | | | |

Example 8 (comparative) showed no film thickness change after a 30 second and 60 second development. In contrast, both of inventive Examples 9 and 10 provided polymers that worked with aqueous development.

**Table 3: DSC Exotherm at 260 °C for The Polymer of Example 1**

| **Time (hr)** | **Residual Exotherm (J/g)** |
|---|---|
| 30 | 65.4 |
| 36 | 58.1 |
| 48 | 44.7 |
| 60 | 30.3 |
| 124 | 5.8 |

Table 3, above, shows that the Polymer in Example 1 has substantially no unreacted arylcyclobutene groups after from 60 to 124 hours of B-staging. Table 4: GPC in Polymerization

| **Example 1: With Capping** | | **Example *1A: Without Capping** | |
|---|---|---|---|
| Time (hr) | MW | Time (hr) | MW |
| 0 | 300 | 0 | 300 |
| 18 | 1492 | 2 | 785 |
| 30 | 2179 | 5 | 957 |
| 36 | 2520 | 7 | 1081 |
| 48 | 3863 | 24 | 2968 |
| 60 | 5016 | 27 | 3514 |
| 124 | 23970 | 43 | 12380 |

Example 1A is 30 mole % BCB-AA and 70 mole % DVS-bis-BCB, made in the same manner as the inventive polymer of Example 1, above, but without a radical inhibitor and without MAH. As shown in Table 4, above, the endcapped polymer of Example 1 versus the Comparative polymer of Example 1A, molecular weight builds substantially faster, evidencing a lower energy of reaction. Further, without endcapping, as in the polymer of Comparative Example 1A, heating for 45 hours leads to gel conditions.

### Examples 11 to 13: Polymers from monomer mixtures

A series of polymers was formed from the given monomer mixtures below in Table 5, below, without B-staging. The monomer mixtures were reacted at 175°C for the indicated time.

**Table 5: Monomer Mixtures and Polymers**

| **Example** | **DVS (g)** | **MAH (g)** | **Rxn time (hr)** | **Mw (kDa), PDI** | **Res. Exo (J/g)** |
|---|---|---|---|---|---|
| **11*** | 10.0 | 1.4 | 18 | 14.4,5.3 | 131.4 |
| **12** | 10.0 | 2.5 | 24 | 13.1,4.3 | 62.7 |
| **13** | 10.0 | 10.0 | 20 | 2.5, 2.1 | 12.1 |

| | | | | | |
|---|---|---|---|---|---|
| *- Denotes Comparative Example. | | | | | |

As shown in Table 5, above, the polymers made in accordance with the present invention in Examples 12 and 13 do not increase in molecular weight during polymerization because the B-staging reaction leads to endcapping rather than polymerization or curing by arylcyclobutene monomer. The resulting inventive polymers can be polymerized and cured without polymerization or cure of the arylcyclobutene groups well below the temperature of Comparative Example 11.

**Table 6: Po vmers From Multiple Monomers. All B-Staged**

| **Example** | **DVS (g)** | **MAH (g)** | **NP M (g)** | **Rxn time/temp (hr/°C)** | **Mw (kDa), PDI** | **Res. Exo (J/g)** |
|---|---|---|---|---|---|---|
| **14** | 20.0 | 7.4 | 22.4 | 6/200 | 2.4, 7.0 | 24.9 |
| **15** | 10.0 | 4.8 | 18.1 | 6/200 | 2.3, 6.2 | 3.5 |
| **16** | 10.0 | 6.0 | 24.9 | 6/200 | 2.4. 3.7 | 1.3 |
| **17** | 10.0 | 7.2 | 31.6 | 8/200 | 4.3, 13.4 | 15.9 |
| **18** | 10.0 | 6.0 | 24.9 | 8/200 | 2.6, 9.3 | 14.4 |
| **19** | 10.0 | 6.0 | 24.9 | 24/190 | 2.5, 2.9 | 3.0 |
| **20** | 10.0 | 6.0 | 24.9 | 24/180 | 2.7, 3.2 | 32.3 |

| | | | | | | |
|---|---|---|---|---|---|---|
| *- Denotes Comparative Example. | | | | | | |

The formulations in Table 6, above, were made by B-staging the DVS monomer in the presence of the indicated second monomers and a radical inhibitor at a temperature and time period shown in Table 6; after this, further polymerization was not conducted.

As shown in Table 6, above, the polymers made in accordance with the present invention in Examples 14 to 20 did not gel during reaction because the B-staging reaction leads to endcapping rather than polymerization or curing by the bis-arylcyclobutene monomer. The residual exotherms are small, evidencing completion of B-staging. The resulting inventive polymers can be polymerized in the presence of curing agents and cured without polymerization or cure of the arylcyclobutene groups themselves and well below the temperature of the reaction of an arylcyclobutene group.

**Table 7: Polymers From Multiple Monomers. All B-Staged**

| **Example** | **DVS (g)** | **MA H(g)** | **BM I(g)** | **Rxn time/temp (hr°C)** | **Mw (kDa), PDI** | **Res. Exo (J/g)** |
|---|---|---|---|---|---|---|
| **21** | 30.0 | 5.3 | 5.5 | 15/175 | 8.9, 4.3 | 117.1 |
| **22** | 10.0 | 4.0 | 1.0 | 124/175 | 24.0, 8.7 | 5.8 |
| **23** | 10.0 | 4.0 | 3.0 | 48/175 | 84.0, 25.7 | 28.7 |
| **24** | 30.0 | 12.0 | 3.0 | 60/175 | 14.5, 5.6 | 20.6 |
| **25** | 30.0 | 16.0 | 3.0 | 60/175 | 2.9, 1.9 | 10.0 |
| **26** | 10.0 | 5.3 | 1.0 | 72/175 | 8.0, 3.9 | 7.7 |
| **27** | 60.0 | 24.0 | 6.0 | 73/175 | 7.9, 3.9 | 25.6 |
| **28*** | 60.0 | 24.0 | 6.0 | 78/175 | GEL | n.a. |
| **29** | 60.0 | 24.0 | 6.0 | 60/175 | 9.6, 6.5 | 40.9 |

| | | | | | | |
|---|---|---|---|---|---|---|
| *- Denotes Comparative Example. | | | | | | |

The formulations in Table 7, above, were made by B-staging the DVS monomer in the presence of the other monomers and a radical inhibitor at a temperature and time period shown in Table 7; after this, further polymerization was not conducted.

As shown in Table 7, above, the polymers made in accordance with the present invention in Examples 21, 22, 24-27, and 29, did not gel during reaction because the B-staging reaction leads to endcapping rather than polymerization or curing by arylcyclobutene monomer. The resulting inventive polymers can be polymerized in the presence of curing agents and cured without polymerization or cure of the

arylcyclobutene groups themselves and well below the temperature of Comparative Examples 4, 5 and 8, above. The one gelled polymer was cooked for longer than all but one example and was believed to have been mishandled.

**Table 8: Polymers From Multiple Monomers. All B-Staged**

| **Example** | **DVS (g)** | **MAH (g)** | **BMI (g)** | **NPM (g)** | **Rxn time/te mp** | **Mw (kDa), PDI** | **Res. Exo (J/g)** |
|---|---|---|---|---|---|---|---|
| **30** | 30.0 | 10.0 | 3.0 | 10.0 | 69/175 | 4.8, 2.5 | 14.5 |
| **31** | 30.0 | 10.0 | 3.0 | 20.0 | 18/190 | 10.6, 5.1 | 17.0 |
| **32** | 10.0 | 6.0 | 0.9 | 24.0 | 24/185 | 3.1, 3.3 | 8.8 |
| **33** | 60.0 | 20.0 | 6.0 | 20.0 | 160/175 | 11.2, 5.6 | 5.7 |
| **34** | 60.0 | 20.0 | 6.0 | 20.0 | 112/175 | 8.8, 4.8 | 34.8 |
| **35** | 60.0 | 20.0 | 6.0 | 20.0 | 234/175 | 31.8, 14.4 | 5.7 |
| **36** | 90.0 | 30.0 | 9.0 | 30.0 | 72/175 | 19.2, 12.3 | 40.4 |
| **37** | 30.0 | 10.0 | 3.0 | 10.0 | 87/175 | 31.4, 15.5 | 25.6 |

| | | | | | | | |
|---|---|---|---|---|---|---|---|
| *- Denotes Comparative Example. | | | | | | | |

The formulations in Table 8, above, were made by B-staging the DVS monomer in the presence of the other monomers and a radical inhibitor at a temperature and time period shown in Table 8; after this, further polymerization was not conducted. As shown in Table 8, above, the polymers made in accordance with the present invention in Examples 30 to 37 did not gel during reaction because the B-staging reaction leads to endcapping rather than polymerization or curing by arylcyclobutene monomer. The resulting inventive polymers can be polymerized in the presence of curing agents and cured without polymerization or cure of the
arylcyclobutene groups themselves and well below the temperature of Comparative Examples 4, 5 and 8, above. Preferably, the amount of BMI as a second monomer should be below 0.25 molar equivalents of dienophile groups, based on the moles of the bis-arylcyclobutene monomers used to make the polymer.

**Table 9: Polymers From Multiple Monomers. All B-Staged**

| **Example** | **DVS (g)** | **MAH (g)** | **BMI (g)** | **NPM (g)** | **Rxn time/temp (hr/°C)** | **Mw (kDa), PDI** | **Res. Exo (J/g)** |
|---|---|---|---|---|---|---|---|
| **38** | 10.0 | 6.0 | 3.9 ^{a} | 24.0 | 24/185 | 3.2, 3.7 | 4.5 |
| **39** | 10.0 | 6.0 | 4.4 ^{b} | 24.0 | 24/185 | 4.1, 4.1 | 19.3 |
| **40** | 30.0 | 10.0 | 12.6 ^{a} | 10.0 | 87/175 | 8.7, 5.0 | 12.3 |
| **41** | 30.0 | 10.0 | 14.4 ^{b} | 10.0 | 87/175 | 16.7, 11.2 | 20.8 |

| | | | | | | | |
|---|---|---|---|---|---|---|---|
| ^{a}= BMI1500; ^{b}= BMI1700; *- Denotes Comparative Example. | | | | | | | |

The formulations in Table 9, above, were made by B-staging the DVS monomer in the presence of the other monomers and a radical inhibitor at a temperature and time period shown in Table 9, after this, further polymerization was not conducted.

As shown in Table 9, above, the polymers made in accordance with the present invention in Examples 38-41 did not gel because the B-staging reaction leads to endcapping rather than polymerization or curing by arylcyclobutene monomer. The resulting inventive polymers can be polymerized in the presence of curing agents and cured without polymerization or cure of the arylcyclobutene groups themselves and well below the temperature of Comparative Examples 4, 5 and 8. Higher molecular weight BMI monomers had a much lower mole content of dienophile groups than the BMI used in Exs. 21-29, above, and did not pose a gelling problem.

**Table 10: Polymers From Multiple Monomers and Maleimide (MI), All B-Staged**

| **Example** | **DV S (g)** | **MAH (g)** | **MI (g)** | **NPM (g)** | **Rxn time/te mp** | **Mw (kDa)/PDI** |
|---|---|---|---|---|---|---|
| 42 | 30.0 | 10.0 | 5.65 | 5.0 | 48/175 | 3.3/2.8 |

The formulation in Table 10, above, were made by B-staging the DVS monomer in the presence of the other monomers and a radical inhibitor at a temperature and time period shown in Table 10, further polymerization was not conducted.

The polymer in Example 42 showed adhesion to a silicon wafer without an adhesion promoter in a formulation comprising the 68% of polymer, 12% of the photoactive compound(s), 19% N541 epoxy, and a mixture of organic solvents. The formulation was spin-coated on both 200 mm silicon and copper wafers and baked at 120 °C to remove residual solvent. Upon exposure to the silicon wafer, no exposure popping was observed. After development with developer, post-adhesion to silicon was excellent with no developer undercut. Films on silicon and copper that were not exposed or developed were cured at 250 °C for 60 minutes under a nitrogen atmosphere. After the cure, the films were scored into 10 by 10 square grids with 1 mm pitch, and adhesion was checked with the tape peel test (ASTM D3359-17 standard, 2017) using a PAT-2000TH tape peel kit (Gardco, Pompano Beach, FL). After testing, the scored films were placed in a pressure cooker for 2 days at 100% relative humidity and 121 °C. After pressure cooking, the scored films were rechecked for tape peel and then scored in a new location and checked for tape peel. The films passed adhesion testing on both silicon and copper before and after pressure cooker tester.

In the following examples, formulations were formed from the indicated polymer and the indicated other materials, in a solids basis. The resulting materials were evaluated for use in photolithography.

EXAMPLE 43: A diamine (2,2'-Bis(trifluoromethyl)benzidine), 8.39g, 0.026 moles) and dimethylacetamide (60g) was added to a flask under nitrogen. A dianhydride (4,4'-(Hexafluoroisopropylidene)diphthalic anhydride, 10g, 0.023 mol) was then added, resulting in a solution. After stirring at room temperature for 3 hours, maleic anhydride (0.72g, 0.007 mol) was added. The reaction was stirred for 12 hours, at which point a mixture of acetic anhydride and triethyl amine was added. The reaction was precipitated into water, and then dried, giving a maleimide-capped polyimide (GPC analysis gives Mw=15.7 kDa, Mn=5.9 kDa and PD1=2.7). The maleimide-capped polyimide (4.96g) was then used as a monomer and mixed with DVS-bis-BCB (30g), maleic anhydride (10g), N-phenylmaleimde (12g), Bis-BMI (3g) and solvent (73.5g of MBA and 20g of GBL). The reaction was heated at 175 °C for 28 hours, giving a polymer with Mw=8.8 kDa and Mn=3.1 kDa (PDI = 2.8). The polymers were then completely hydrolyzed to give polymers comprising diacids. This polymer composition was used in Examples 44 and 45 for negative Tone Lithography.

In Examples 44 and 45, a negative Tone Lithography composition was formulated with epoxy, as shown in Table 11, below, to comprise the polymer composition from the previous paragraph, a mixture of generic multifunctional (meth)acrylates including SR454 triacrylate (Sartomer, Exton, PA), a mixture of epoxies including N541 and GE38, and a UV-absorbing photoinitiator including Irgacure™ 379 initiator (BASF, Ludwigshafen, DE). The formulations comprising polymer compositions of hydrolyzed (i) acidic second monomer, in copolymerized form, were cast as a film by spin-coating onto a 200 mm silicon wafer and baking at 120 °C and gave the indicated physical properties.

**Table 11: Negative Tone Lithography**

| **Example** | **Func** %^{a} | **Acid** #^{b} | **Epoxy** | **Epoxy** %^{c} | **Avg. Ultimate Tensile (MPa)/Modulus (GPa)**^{d} |
|---|---|---|---|---|---|
| **44** | **100%** | 3.34 | N541 | 100% | 86/2.5 |
| **45** | 100% | 4.4 | GE38 | 100% | 52/1.4 |

| | | | | | |
|---|---|---|---|---|---|
| a = post-polymerization functionalization (hydrolysis) level; b = calculated acid #; c = epoxy %, as solids by mass compared to polymer; d = Free standing films were obtained by immersing cured films on copper wafers in 10-30% aqueous ammonium persulfate. After the copper was etched, the free standing films with known dimensions (10 x 25.4 mm with thickness from 5-15 microns) were placed in the clamps of an Instron (Instron Corp., Norwood, MA), and elongated until broken. Multiple samples were run to obtain the average ultimate tensile strength (MPa) and Modulus (GPa). | | | | | |

The compositions in Table 11, above dissolved in aqueous media except where cured and so were aqueous developable. The compositions which were cured by light did not dissolve.

In Examples 46 to 54, a positive tone lithography composition was formulated to comprise the indicated BCB-Capped polymer, multifunctional epoxies and diazonaphthoquinone photoactive compounds. The polymers indicated in Table 12, below, were from the indicated Example. The polymers were then esterified, partly or completely hydrolyzed to give polymers comprising diacids or ester acids. The polymers and part of the formulations are shown in Table 12, below. The formulations were cast as a film by spin-coating onto a 200 mm silicon wafer and baking at 120 °C which had the indicated good physical film properties.

**Table 12: Positive Tone Lithography**

| **Example** | **Polymer Ex.** | **Func** %a | **Acid** #b | **Epoxy** | **Epoxy** %^{c} | **Avg. Ultimate Tensile (MPa)/Modulus (GPa)d** |
|---|---|---|---|---|---|---|
| **46** | **41** | 50% | 3.26 | GE38 | 100% | 81/2.3 |
| **47** | **41** | 100% | 3.26 | GE38 | 100% | 71/2.1 |
| **48** | **41** | 100% | 3.26 | GE38 | 100% | 78/2.2 |
| **49** | **41** | 100% | 3.26 | GE38 | 100% | 74/2.2 |
| **50** | **41** | 100% | 3.26 | GE38 | 100% | 74/2.2 |
| **51** | **41** | 100% | 3.26 | GE38 | 100% | 88/2.5 |
| **52** | **41** | 100% | 5.44 | N541 | 100% | 96/2.1 |
| **53** | **24** | 100% | 5.44 | GE38 | 100% | 81/2.1 |
| **54** | **23** | 100% | 4.8 | GE38 | 100% | 82/2.2 |

| | | | | | | |
|---|---|---|---|---|---|---|
| a = post-polymerization functionalization level; b = calculated acid #; c = epoxy %, as solids by mass compared to polymer; d = see fn d of Table 11, above. | | | | | | |

The compositions above dissolved in aqueous media except where not exposed to light and so were not aqueous developable. The compositions which were exposed to light dissolved; unexposed compositions did not dissolve.

In Examples 55 to 61, a positive tone lithography composition was formulated to comprise the indicated BCB-Capped polymer, multifunctional epoxies and diazonaphthoquinone photoactive compounds. The indicated polymers in Table 13, below, were formed as described in the indicated Example, above, and were then completely hydrolyzed to give polymers comprising diacids. The formulations were cast as a film by spin-coating onto a 200 mm silicon wafer and soft-baking at 120°C, which had the indicated good physical film properties.

**Table 13: Positive Tone Lithography**

| **Example** | **Polymer Ex.** | **Func** %^{a} | **Acid** #^{b} | **Epoxy** | **Epoxy** %^{c} | **Avg. Ultimate Tensile (MPa)/Modulus (GPa)**^{d} |
|---|---|---|---|---|---|---|
| **55** | 30 | 100% | 3.85 | N541 | 100% | 109/2.6 |
| **56** | 30 | 100% | 3.85 | N541 | 50% | 105/2.5 |
| **57** | 30 | 100% | 3.85 | GE38 | 100% | 80/2.2 |
| **58** | 30 | 100% | 3.85 | GE38 | 50% | 91/2.2 |
| **59** | 30 | 100% | 3.85 | N541/ GE38 | 100% (1:1) | 93/2.3 |
| **60** | 30 | 100% | 3.85 | N541/ GE38 | 50% (1:1) | 95/2.3 |
| **61** | 30 | 100% | 3.85 | GE38 | 100% | 82/2.2 |

| | | | | | | |
|---|---|---|---|---|---|---|
| a = post-polymerization functionalization level; b = calculated acid #; c = epoxy %, as solids by mass compared to polymer; d = see fn d in Table 11, above, | | | | | | |

The compositions shown in Table 13, above, dissolved in aqueous alkali Developer 1) and when exposed to light; unexposed compositions did not dissolve. Physical film properties were good.

**Table 14: Reaction of DVS-BCB and Non-polar monomers (diphenyl acetylene)**

| **Example** | BOB | DPA | g BOB | g DPA | g solids | Solvent g MBA | g soln | % solid |
|---|---|---|---|---|---|---|---|---|
| **62** | 1 | 2.0 | 1.161 | 1.072 | 2.233 | 3.373 | 5.606 | 39.8% |
| **63** | 1 | 3.9 | 0.792 | 1.424 | 2.216 | 3.312 | 5.528 | 40.1% |
| **64** | 1 | 7.8 | 0.499 | 1.782 | 2.281 | 3.427 | 5.708 | 40.0% |

Examples 62 to 64: In Examples 62 to 64, the monomer mixture indicated in Table 14, above, contained between a molar ratio of from 1:2 to 1:8 of alkyne groups per mole of BCB groups. The excess moles of unreacted second monomer or offset stoichiometry (i) lowers the crosslink density, *(ii)* retards the molecular weight growth of the polymer and *(iii)* allows for a much more controlled polymerization. DVS-bis-BCB (1.161g, 2.97mmol), and diphenyl acetylene (1.072 g, 6.01mmol) were added to a 10m1 glass test tube along with a magnetic stir bar. 3-methoxy-1-butylacetate (MBA, 5.606 g) was added to the test tube and a rubber 8mm septum was used to seal the test tube. Polymers in Examples 63 and 64 were prepared in the same manner as the polymer of Example 62 and in the proportions indicated in Table 14, above. Each of the polymers was heated using an EZ Max reactor an adapter to allow simultaneous heating of 4 test tubes. The thermocouple for the reaction was located in the 4th test tube which contained only MBA solvent and a magnetic stir bar. The reaction temperature was set to 172°C and the solution was heated to temperature at a rate of 5°C/minute. After ca. 30 minutes, the solution reached ca. 172 °C and a pale yellow solution was obtained.

The reaction was heated for a total time of 62 hours after which the solution was allowed to cool to RT. GPC and DSC analysis was performed. The molecular weight and residual cure for all three examples are shown in Table 15, below.

**Table 15. Results from reaction of DVS-BCB with Non-polar monomers**

| **Example** | Mw (GPC) | Residual Cure (DSC) |
|---|---|---|
| **62** | Gelled | NM |
| **63** | 165K | none |
| **64** | 131K | none |

## Claims

1. An organic solvent soluble or aqueous alkali soluble polymer composition comprising, in copolymerized form, one or more bis-arylcyclobutene monomers and one or more olefin or dienophile group containing second monomers, wherein the polymer is substantially free of unreacted arylcyclobutene groups.

2. The polymer composition as claimed in claim 1, wherein the one or morebis-arylcyclobutene monomers is chosen from bis-benzocyclobutene (bis-BCB) or a bis-arylcyclobutene monomer containing one or more additional olefin or ethylenically unsaturated groups.

3. The polymer composition as claimed in claim 1, wherein the one or more bis-arylcyclobutene monomers is 1,3-bis(2-bicyclo[4.2.0]octa-1,3,5-trien-3-yl-ethenyl)-1,1,3,3-tetramethyldisiloxane (DVS-bis BCB).

4. The polymer composition as claimed in claim 1, wherein the one or more olefin group or dienophile group containing second monomers contains at least one group chosen from a vinyl, allyl, olefin or alkyne group.

5. The polymer composition as claimed in claim 1, wherein the one or more olefin group or dienophile group containing second monomers is (i) a monomer that has an acidic or hydrolyzable group chosen from carboxylic acids, anhydrides, carboxylic acid esters, amic acids, N-alkyl imides of dicarboxylic acids, N-aryl imides of dicarboxylic acids, N-imides of dicarboxylic acids, carboxylic acid esters, cyclic sulfones, sulfonic acids, acetoacetate, alkanols, amides, phenols, sulfonamides and (alk)oxysilanes.

6. The polymer composition as claimed in claim 1, wherein the one or more olefin group or dienophile group containing second monomers is (ii) a non-polar monomer chosen from cyclic olefins; dimers of cyclic olefins; dienes; aromatic vinyl group containing monomers having two or more vinyl groups; alkynes; linear and branched alkenes; allyl, alkyne or maleimide terminated polyimides, polyols or polyarylene ethers or polysiloxanes; or other ethylenically unsaturated group containing non-polar monomers having a normal boiling point of at least 150°C, wherein the composition can be developed by organic solvents.

7. The polymer composition as claimed in claim 1, further comprising a crosslinker, a curing agent or both.

8. The polymer composition as claimed in claim 5, further comprising a crosslinker chosen from a condensation crosslinker, a crosslinking monomer separate from the polymer, or mixtures thereof.

9. The polymer composition as claimed in claim 1, which dissolves in aqueous alkali and comprises, in copolymerized form, the bis-arylcyclobutene monomer, and one or more olefin group or dienophile group containing second monomers having an acidic group, the polymer composition further comprising a condensation crosslinker and cures via condensation reaction of the crosslinker with the acidic group.

10. The polymer composition as claimed in claim 1, wherein one or more olefin group or dienophile group containing second monomers contains a second dienophile group, and the composition can be crosslinked via thermally induced or light induced initiation reactions in the presence of a curing agent.
